# EUROPÄISCHE PATENTSCHRIFT

(11) **EP 1 099 060 B1**
(45) Veröffentlichungstag und Bekanntmachung des Hinweises auf die Patenterteilung: **16.10.2002**
(21) Anmeldenummer: 99940028.6
(22) Anmeldetag: 21.07.1999
(51) Int. Cl.: F16D 3/205

(54) **TRIPODE-GLEICHLAUFDREHGELENK**
TRIPOD HOMOCINETIC REVOLUTE JOINT
JOINT HOMOCINETIQUE TRIPODE

(30) Priorität: 31.07.1998 DE 19834513
(43) Veröffentlichungstag der Anmeldung: 16.05.2001
(73) Patentinhaber: INA-Schaeffler KG, 91074 Herzogenaurach (DE)
(72) Erfinder: OLSZEWSKI, Piotr, F-67500 Haguenau (FR)
(86) Internationale Anmeldenummer: EP9905190
(87) Internationale Veröffentlichungsnummer: WO00008348

(56) Entgegenhaltungen:
- EP-A- 0 441 382
- EP-A- 0 532 992
- DE-A- 4 331 474

## Beschreibung

### Anwendungsgebiet der Erfindung

Die vorliegende Erfindung betrifft ein Tripode-Gleichlaufdrehgelenk mit einem ersten Drehteil, einem Gehäuse, das mit drei Laufbahneinrichtungen, von denen jede aus zwei parallelen, ebenen Laufflächen besteht, versehen ist und einem zweiten, als Tripodestem gestalteten Drehteil. Dabei umfaßt das zweite Drehteil drei Zapfen, deren Achsen in einer Ebene angeordnet sind und die sich in einer Gelenkachse treffen. Die Zapfen sind dabei mittels Wälzlager in den Laufflächen der Laufbahneinrichtung winkelbeweglich und verschiebbar geführt. Jedem Zapfen ist ein Wälzlager zugeordnet, welches einen Innenring und einen Außenring umfaßt, zwischen denen zylindrisch geformte Wälzkörper geführt sind. Zur gegenseitigen Sicherung aller Bauteile und zur Schaffung einer unverlierbaren Einheit des Wälzlagers sind Halteringe vorgesehen.

### Hintergrund der Erfindung

Tripode-Gleichlaufdrehgelenke in der zuvor genannten Bauart finden vorzugsweise in den Antriebswellen der angetriebenen Vorderräder von Krafftfahrzeugen Anwendung. Das Dokument DE-A-43 31 474 zeigt ein gattungsbildendes Gleichlaufdrehgelenk, bei dem alle Bauteile des Wälzlagers mit einer axialen Sicherung versehen sind. Die Figur 2 c dieses Dokumentes zeigt dazu einen asymmetrisch gestalteten Außenring mit einem einseitigen Bord, der einen Axialanschlag für die Wälzkörper bildet. Axialversetzt zu dem Axialanschlag der Wälzkörper ist der radial nach innen gerichtete Bord mit einer Ringnut versehen, in die ein Haltering eingesetzt ist. Innenseitig ist der Haltering in einer mit der Radialnut korrespondierenden Umlaufnut in dem Innenring des Wälzlagers fixiert. Zur Schaffung eines weiteren Axialanschlags für die Wälzkörper ist der Außenring mit einem Sicherungsring versehen, eingesetzt in eine Ringnut des Außenrings, der innenseitig unter Einhaltung eines Ringspaltes, bis an die Mantelfläche des Wälzlagers-Innnenrings erstreckt. Dieser bekannte Wälzlageraufbau fordert eine lagerorientierte Montage, aufgrund des asymmetrisch gestalteten Außenrings.

Ein weiteres Gleichlaufdrehgelenk zeigt die DE-C2-44 29 479. Zur gegenseitigen, axialen Sicherung aller Bauteile des auf den Zapfen angeordneten Wälzlagers sind in den Außenringen des Wälzlagers in Ringnuten eingesetzte Halteringe vorgesehen. Diese Halteringe umfassen jeweils außenseitig die Außenkontur des Innenrings. Dabei bilden die Halteringe sowohl für die Wälzkörper als auch für den Innenring einen Axialanschlag, wobei diese Bauteile unmittelbar am Haltering abgestützt sind. Aufgrund der gemeinsamen Abstützung am Haltering ist dieser einer höheren Querkraft ausgesetzt und bedarf daher einer stärkeren Dimensionierung. Ein entsprechend verstärkter und damit versteifter Haltering beeinflußt nachhaltig die Handhabung.

### Aufgabe der Erfindung

Von den technischen Mängeln der bekannten Lösung ausgehend, ist es daher Aufgabe der Erfindung, eine axiale Sicherung für alle Bauteile des Wälzlagers zu realisieren, die eine einfache Handhabung und kostengünstige Fertigung der Halteringe ermöglicht.

### Zusammenfassung der Erfindung

Diese zuvor genannte Problemstellung wird durch die kennzeichnenden Merkmale von Anspruch 1 gelöst, danach bildet der Außenring des Wälzlagers beidseitig der Wälzkörper einen zweifach radial gestuften Bord. An dem axial inneren Bordabschnitt sind die Wälzkörper geführt und ein seitlich versetzter, äußerer Bordabschnitt bildet einen Axialanschlag für den Haltering. Aufgrund dieser erfindungsgemäßen Konstruktion ergibt sich eine gewünschte, getrennte Axialführung zwischen den Wälzkörpern und dem Haltering. Eine gegenseitige Beeinflussung scheidet damit aus, d.h. der einen Axialanschlag bildende innere Bordabschnitt des Außenrings bzw. der Haltering nimmt nur die Querkräfte von dem Bauteil auf, mit dem dieser in Verbindung steht. Folglich kann der Haltering im Vergleich zum Stand der Technik deutlich schwächer dimensioniert sein, d.h. die erforderliche Wandstärke des Halterings kann reduziert werden. Außerdem ergibt sich ein kleinerer Außendurchmesser des Halterings, da dieser die Bauhöhe der Wälzkörper nicht überdeckt, sondern an der radial nach innen versetzten Stufe des Außenrings geführt ist. Der erfindungsgemäße Haltering erfordert daher geringere Herstellkosten und verbessert das Handling, da aufgrund der geringeren Steifigkeit die Montage vereinfacht ist.

Die Erfindung bewirkt eine eindeutige Trennung der Axialführungen für die Wälzkörper und für den Innenring des Wälzlagers. Gleichzeitig stellt sich eine vereinfachte Montage des Halterings ein, der zudem im Vergleich zum Stand der Technik vorteilhaft kleiner dimensioniert ist, d.h. einen kleineren Außendurchmesser aufweist, sowie eine reduzierte Wandstärke. Dazu ermöglicht das Wälzlager eine Wälzkörperbreite, die im Vergleich zum Stand der Technik unverändert ist.

Weitere vorteilhafte Ausgestaltungen der Erfindung sind Gegenstand der Ansprüche 2 bis 13.

Eine Ausgestaltung der Erfindung sieht vor, daß die erste Stufe des Bordes, die einen Axialanschlag für die Wälzkörper bildet, sich radial bis nahe an die Wälzkörpermitte erstreckt. Diese Stufenhöhe ist zum einen ausreichend für eine sichere Seitenführung der Wälzkörper und erfordert andererseits eine geringe spanende Bearbeitung.

In einer weiteren Ausgestaltung der Erfindung ist eine axiale Beabstandung zwischen der ersten radialen Stufe zur zweiten radialen Stufe vorgesehen, deren Maß die Wandstärke des Halteringes übertrifft. Diese Stufenanordnung ermöglicht die Verwendung eines Innenrings, dessen Breite die Länge der Wälzkörper übertrifft. Damit ist sichergestellt, daß die Wälzkörper über die gesamte Länge auf der Mantelfläche des Innenrings abgestützt und geführt sind.

Als Maßnahme zur Erzielung einer vereinfachten Montage des Halterings im Außenring des Wälzlagers weist der Haltering eine Trennfuge auf. Dabei kann die Breite der Trennfuge unabhängig vom Durchmesser der Wälzkörper gestaltet werden, da sich die Wälzkörper nicht am Haltering abstützen. Eine große Fugenbreite ermöglicht eine deutliche Montagevereinfachung, da eine große Fugenbreite das für den Einbau des Halterings erforderliche radiale Zusammenpressen des Halterings vereinfacht und damit das Handling bzw. die Montage des Halterings verbessert. Da der Haltering ausschließlich zur Abstützung bzw. Führung des Wälzlager-Innenrings vorgesehen ist, kann die Trennfugenbreite des Halterings ausschließlich nach den Gesichtspunkten einer vereinfachten Montage ausgelegt werden. Eine Abstimmung der Trennfugenbreite im Hinblick auf den Durchmesser des Wälzkörpers kann damit im Vergleich zum bekannten Stand der Technik entfallen. Folglich ist auch keine bevorzugte Anordnung der Trennfuge erforderlich, d.h. die Trennfuge kann sowohl radial im Haltering eingebracht sein als auch zu einem Radialstrahl schräg ausgerichtet werden.

Der Außenring des Wälzlagers von dem erfindungsgemäßen Tripode-Gleichlaufdrehgelenk ist jeweils unmittelbar im Bereich der ersten Radialstufe, d. h. am Ende der Wälzkörper-Laufbahn mit einem umlaufenden Freistich versehen. Für die Lage und die Ausgestaltung der Freistiche ist vorgesehen, daß diese mit dem freien Ende der Wälzkörper korrespondieren. Ein Freistich bewirkt eine Entlastung, d.h. Vermeidung von Spannungspitzen, die von den Wälzkörperenden in die Wälzkörperlaufbahn des Außenrings eingeleitet werden.

Zur Erzielung eines gewissen Freiheitsgrades ist in der Einbaulage des Wälzlagers ein Abstandsmaß zwischen den Halteringen und der Innenringstirnseite vorgesehen. Dieses Axialspiel ermöglicht ein einbaubedingtes Ausrichten zwischen den Wälzlagerbauteilen und vermeidet nachteilige Verspannungen.

Die Erfindung schließt weiter ein Überdeckungsmaß ein, das sich zwischen dem Innendurchmesser des Halterings und dem Außendurchmesser des Innenrings ergibt. Zur Erzielung einer ausreichenden Lagefixierung des Innenrings ist danach ein Überdeckungsmaß ausreichend, das gleich oder größer der halben Wandstärke des Halterings ausgelegt ist.

Die Ausgestaltung des Außenrings schließt eine Wandstärke des axial äußeren Bordes ein, die gleich oder größer der halben Wandstärke des Halterings ist.

Eine weitere Ausgestaltung der Erfindung sieht Außenringe des Wälzlagers mit unterschiedlich gestalteten Außenprofilen vor. Beispielsweise kann der Außenring mit einem gerundeten, nahezu halbkreisförmigen Außenprofil versehen sein. Alternativ bietet es sich an, das zylindrisch gestaltete Außenprofil des Außenrings mit einem radial gestuften, ebenfalls zylindrischen Abschnitt zu versehen. Der radial austretende zylindrische Abschnitt kann dabei symmetrisch oder beliebig versetzt zur Mitte des Außenrings angeordnet sein. Eine weitere Gestaltung des Außenrings sieht vor, daß dieser über ein Außenprofil in der Laufbahneinrichtung des Gehäuses von dem Tripode-Gleichlaufdrehgelenk geführt ist, das einem Spitzdach entspricht.

### Kurze Beschreibung der Zeichnungen

Anhand von Ausführungsbeispielen, dargestellt in vier Figuren, wird die Erfindung näher erläutert.

Es zeigen:
- Figur 1: einen Halbschnitt durch ein erfindungsgemäßes Wälzlager für ein Tripode-Gleichlaufdrehgelenk;
- Figur 2: ein Tripode-Gleichlaufdrehgelenk im Querschnitt zur Gelenkachse;
- Figuren 3 bis 6: jeweils einen Zapfen des in Figur 2 abgebildeten Tripode-Gleichlaufdrehgelenks mit einem Wälzlager, welches Außenringe mit unterschiedlichen Außenprofilen umfaßt;

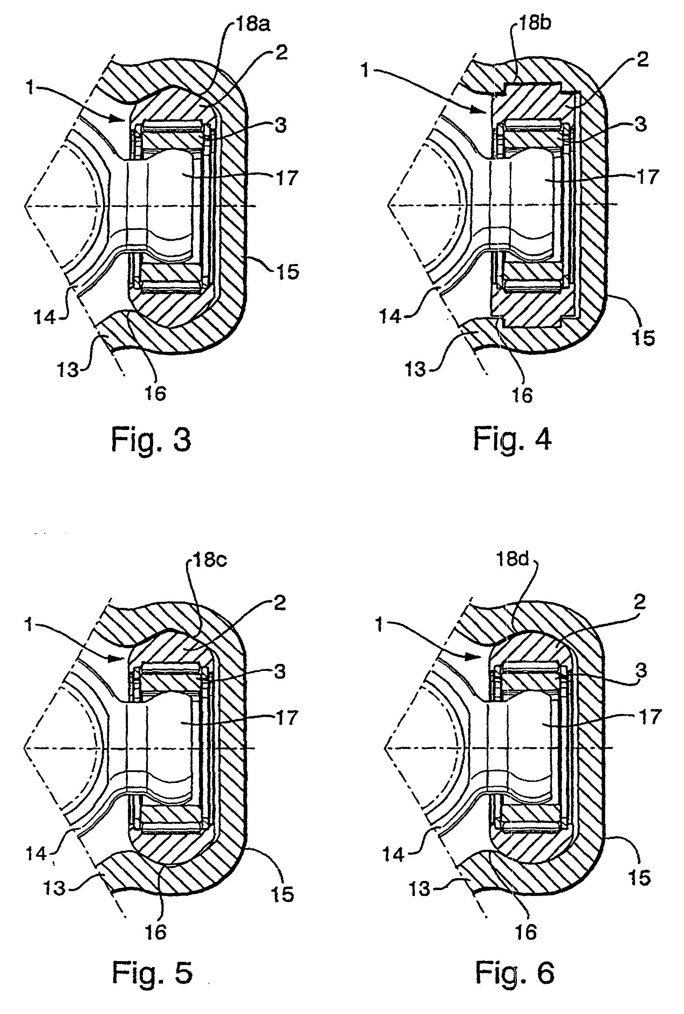

- Figur 3: einen Außenring des Wälzlagers mit einem nahezu dachförmig gestalteten Außenprofil;
- Figur 4: ein Wälzlager, dessen Außenring mit einem zylindrisch gestalteten Außenprofil versehen ist, wobei dieses in einer Mittenzone einen radial nach außen gerichteten, ebenfalls zylindrisch geformten Ansatz aufweist;
- Figur 5: einen Außenring mit einem nahezu halbrundförmig gestalteten Außenprofil, das in einer Laufbahneinrichtung geführt ist, deren Formgebung vom Außenprofil des Außenrings abweicht;
- Figur 6: einen Wälzlager-Außenring gemäß Figur 6, dessen Außenprofil übereinstimmt mit der Formgebung der Führung in der Laufbahneinrichtung.

### Ausführliche Beschreibung der Zeichnungen

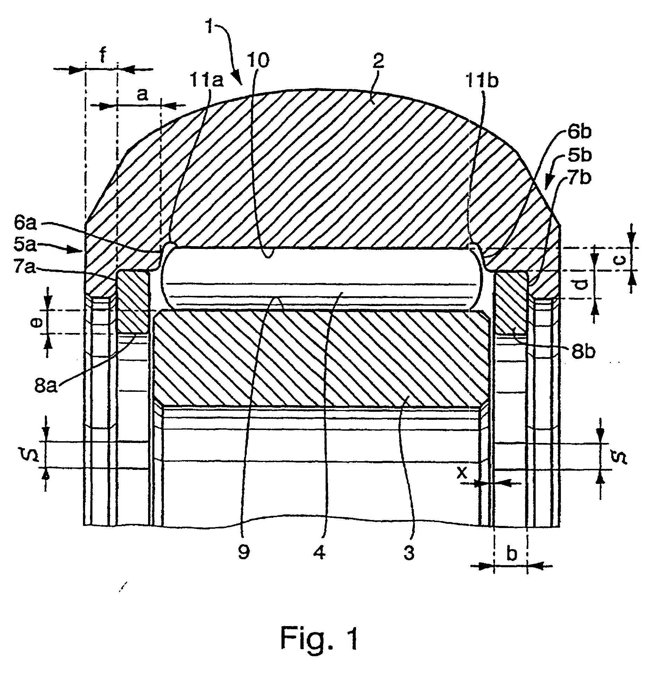

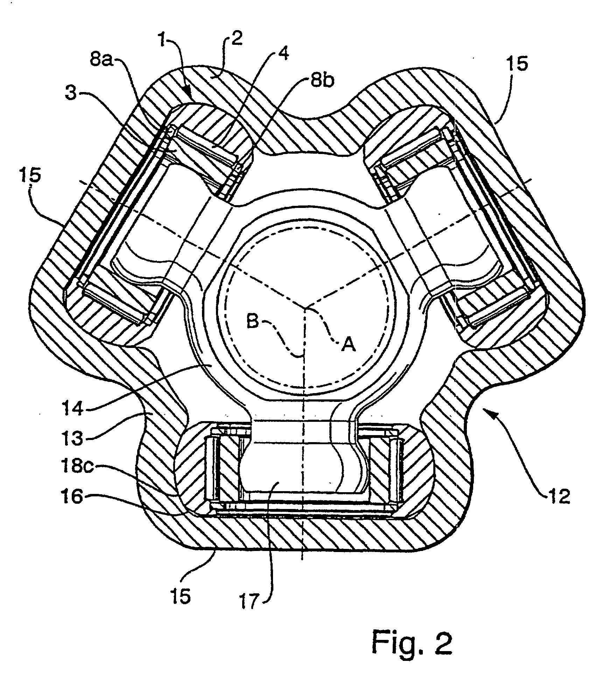

Den Aufbau des erfindungsgemäßen Wälzlagers 1 für ein Tripode-Gleichlaufdrehgelenk 12 gemäß Figur 2 verdeutlicht die Figur 1. Das Wälzlager 1 umfaßt einen Außenring 2, der einen Innenring 3 koaxial umschließt. Zwischen dem Außenring 2 und dem Innenring 3 sind zylindrisch als Nadeln geformte Wälzkörper 4 angeordnet. An beiden Stirnseiten der Wälzkörper 4 ist der Außenring 2 jeweils mit einem zweifach gestuften Bord 5a, 5b versehen. Dabei ist ein axial innerer Bordabschnitt 6a, 6b, der eine erste Stufe bildet, als Axialanschlag für die Wälzkörper 4 vorgesehen. Axial beabstandet zum Bordabschnitt 6a, 6b bildet der Bord 5a, 5b einen weiteren, radial nach innen versetzten Bordabschnittt 7a, 7b, an dem ein Haltering 8a, 8b geführt ist und der gleichzeitig als Axialanschlag für den Haltering 8a, 8b ausgebildet ist. Ein Abstandsmaß "a", das die axiale Beabstandung zwischen den Bordabschnitten 6a, 6b und 7a, 7b bestimmt, ist dabei größer als eine Wandstärke "b" des Halterings 8a, 8b. Diese maßliche Differenz ermöglicht die Ausbildung eines breiteren Innenrings 3 im Vergleich zur Länge der Wälzkörper 4. Damit ist sichergestellt, daß die Wälzkörper über die gesamte Länge auf einer Mantelfläche 9 des Innenrings 3 abgestützt sind.

Zur Erzielung einer Druckentlastung bzw. Vermeidung einer unzulässig hohen Belastung einer Laufbahn 10 für die Wälzkörper 4 im Außenring 2 ist die Lauffläche 10 im Bereich der Stirnseiten der Wälzkörper 4 mit Freistichen 11a, 11b versehen, die auch als Entlastungsnuten zu bezeichnen sind. Die Freistiche 11a, 11b ermöglichen eine maßlich exakte, durch ein Schleifen herstellbare Laufbahn 10. Der Bordabschnitt 6a, 6b besitzt eine radiale Überdeckung zu den Wälzkörpern 4, wobei das die Überdeckung bestimmende Maß "c" gleich oder kleiner dem halben Durchmesser der Wälzkörper 4 entspricht. Der Bordabschnitt 7a, 7b besitzt dagegen eine radiale Überdeckung zur Außenkontur des Halterings 8a, 8b, dessen Maß "d" gleich oder kleiner der Wandstärke "b" des Halterings 8a, 8b entspricht. Eine weitere radiale Überdeckung besteht zwischen der Innenkontur des Halterings 8a; 8b und der äußeren, durch die Mantelfläche 9 gekennzeichneten Außenkontur des Innenrings 3. Dieses durch "e" gekennzeichnete Maß ist gleich oder größer der halben Wandstärke "b" des Halterings 8a, 8b. Die Halteringe 8a, 8b verfügen jeweils über eine Trennfuge "S", die den Einbau des Halterings 8a, 8b in den Außenring 2 ermöglicht. Zur Montage wird der Haltering 8a, 8b radial soweit vorgespannt, daß dieser den durch den Bordabschnitt 7a bzw. 7b vorgegebenen Innendurchmesser des Außenrings 2 überbrückend eingesetzt werden kann. Dabei ist das Maß für die Trennfuge "S" nahezu frei bestimmbar, d.h. ohne Berücksichtigung des Wälzkörper-Durchmessers, da der Haltering 8a, 8b nicht zur Führung der Wälzkörper 4 dient.

In Figur 2 ist ein Tripode-Gleichlaufdrehgelenk 12 abgebildet, welches aus einem ein Gelenkaußenteil bildendes Gehäuse 13 und einem ein Gelenkinnenteil bildenden Tripodestern 14 besteht. Das Gehäuse 13 umfaßt drei Laufbahneinrichtungen, von denen jede zwei parallel ebene Laufflächen 16 umfaßt. Der Tripodestern 14 ist mit drei Zapfen 17 versehen, deren Achsen "B" in einer Ebene angeordnet sind und sich in der Gelenk-Längsachse "A" schneiden. Die radial zur Gelenk-Längsachse "A" ausgerichteten Zapfen 17 bilden am freien Ende jeweils eine kugelkopfartig gestaltete Aufnahme, auf der (gemäß Figur 1) jeweils ein Innenring 3 des Wälzlagers 1 geführt ist. Der Außenring 2 des Wälzlagers 1 ist mit seiner Außenkontur in den Laufflächen 16 des Gehäuses 13 geführt, wobei die Laufflächen 16 an die Außenkontur, d.h. das Außenprofil 18c des Außenrings angepaßt sind.

Die Figuren 3 bis 6 unterscheiden sich jeweils durch geometrisch unterschiedlich geformte Außenprofile 18a bis 18d, die mit entsprechend gestalteten Laufflächen 16 im Gehäuse 13 zusammenwirken.

Der in Figur 3 abgebildete Außenring 2 ist versehen mit einem weitestgehend dachförmig gestalteten Außenprofil 18a. In Figur 4 ist der Außenring 2 mit einem radial gestuften zylindrischen Außenprofil 18b versehen. Das nahezu halbkreisförmig gestaltete Außenprofil 18c gemäß Figur 5 ist im Gehäuse 13 geführt, wobei deren Laufflächen 16 einen vom Außenprofil 18c abweichenden Radius aufweisen. Das Außenprofil 18d gemäß Figur 6 ist ebenfalls halbrundartig ausgebildet, das im Unterschied zu Figur 5 in Laufflächen 16 des Gehäuses 13 geführt ist, die an die Formgebung des Außenprofils 18d angepaßt sind.

### Bezugszahlenliste

- 1: Wälzlager
- 2: Außenring
- 3: Innenring
- 4: Wälzkörper
- 5a: Bord
- 5b: Bord
- 6a: Bordabschnitt
- 6b: Bordabschnitt
- 7a: Bordabschnitt
- 7b: Bordabschnitt
- 8a: Haltering
- 8b: Haltering
- 9: Mantelfläche
- 10: Laufbahn
- 11a: Freistich
- 11b: Freistich
- 12: Tripode-Gleichlaufdrehgelenk
- 13: Gehäuse
- 14: Tripodestern
- 15: Laufbahneinrichtung
- 16: Lauffläche
- 17: Zapfen
- 18a: Außenprofil
- 18b: Außenprofil
- 18c: Außenprofil
- 18d: Außenprofil
- A -: Gelenkachse
- B -: Zapfenachse

- a -: axialer Abstand zwischen dem Bordabschnitt 6a, 6b und dem Bordabschnitt 7a, 7b
- b -: Wandstärke des Halterings 8a, 8b
- c -: radiale Überdeckung des Bordabschnitts 6a, 6b
- d -: radiale Überdeckung des Bordabschnitts 7a, 7b
- e -: radiale Überdeckung zwischen dem Haltering 8a, 8b und dem Innenring 3
- f -: Wandstärke des Bordabschnitts 7a, 7b
- S -: Trennfuge des Halterings 8a, 8b

## Patentansprüche

1. Tripode-Gleichlaufdrehgelenk (12) mit einem ersten Drehteil, einem Gehäuse (13), das mit drei Laufbahneinrichtungen (15), von denen jede aus zwei parallelen, ebenen Laufflächen (16) besteht, versehen ist, einem zweiten, als Tripodestern (14) gestalteten Drehteil, das drei Zapfen (17) aufweist, deren Zapfenachse "B" in einer Ebene angeordnet, sich in einer Gelenkachse "A" treffen und die Zapfen (17) in den Laufflächen (16) des Gehäuses (13) geführt sind, wobei jedem Zapfen (17) ein Wälzlager (1) zugeordnet ist, bestehend aus einem Innenring (3), einem Außenring (2) und zylindrisch geformten Wälzkörpem (4) und zur gegenseitigen, axialen Sicherung aller Bauteile des Wälzlagers (1) bezogen auf die Zapfenachse "B" des Wälzlagers (1) Halteringe (8a, 8b) vorgesehen sind, **dadurch gekennzeichnet, daß** der Außenring (2) spiegelsymmetrisch angeordnete, zweifach radial gestufte innere Borde (5a, 5b) umfaßt, wobei an einem axial inneren Bordabschnitt (6a, 6b) die Wälzkörper (4) und an dem axial äußeren Bordabschnitt (7a, 7b), die spiegelsymmetrisch angeordneten der Halteringe (8a, 8b) geführt sind.

2. Drehgelenk nach Anspruch 1, **dadurch gekennzeichnet, daß** sich der erste Bordabschnitt (6a, 6b) radial bis nahe an eine Symmetrieachse der Wälzkörper (4) erstreckt

3. Drehgelenk nach Anspruch 1, **gekennzeichnet durch** eine axiale Beabstandung des zweiten Bordabschnitts (7a, 7b) zum ersten Bordabschnitt (6a, 6b), deren Maß "a" eine Wandstärke "b" des Halterings (8a, 8b) übertrifft.

4. Drehgelenk nach Anspruch 1, **gekennzeichnet durch** ein Längenmaß des Innenrings (3), das ein Längenmaß der Wälzkörper (1) übertrifft.

5. Drehgelenk nach Anspruch 1, **dadurch gekennzeichnet, daß** die Halteringe (8a, 8b) eine Trennfuge aufweisen, deren Fugenbreite "S" gleich oder kleiner dem Durchmesser der Wälzkörper (4) entspricht.

6. Drehgelenk nach Anspruch 5, **dadurch gekennzeichnet, daß** die Trennfuge "S" des Halterings (8a, 8b) radial zur Zapfenachse "B" ausgerichtet verläuft.

7. Drehgelenk nach Anspruch 1, **dadurch gekennzeichnet, daß** im Außenring (2) korrespondierend mit einer Stirnseite der Wälzkörper (4) unmittelbar vor dem Bordabschnitt (6a, 6b) ein Freistich (11a, 11b) eingebracht ist.

8. Drehgelenk nach Anspruch 1, **gekennzeichnet durch** ein Abstandsmaß "x" zwischen den Halteringen (8a, 8b) und der Stirnseite des Innenrings (3) in einer Einbaulage.

9. Drehgelenk nach Anspruch 1, **gekennzeichnet durch** ein radiales Überdeckungsmaß "e" zwischen dem Haltering (8a, 8b) und dem Außendurchmesser des Innenrings (3), das gleich oder größer der Wandstärke des Halterings (8a, 8b) ausgelegt ist.

10. Drehgelenk nach Anspruch 1, **gekennzeichnet durch** eine Breite "f" des Bordabschnitts (7a, 7b), die gleich oder größer der halben Wandstärke des Halterings (8a, 8b) entspricht.

11. Drehgelenk nach Anspruch 1, **gekennzeichnet durch** ein gerundetes Außenprofil (18) des Außenrings (2).

12. Drehgelenk nach Anspruch 1, **dadurch gekennzeichnet, daß** der Außenring (2) ein radial gestuftes, zylindrisches Außenprofil (18d) aufweist.

13. Drehgelenk nach Anspruch 1, **gekennzeichnet durch** ein Außenprofil (18a) mit einer umlaufenden, nahezu spitzdachförmigen Profilierung.

## Claims

1. A tripod type constant velocity universal joint (12) comprising a first rotation part configured as a housing (13) having three tracks (15) each of which has two flat, parallel running surfaces (16), a second rotation part configured as a tripod spider (14) comprising three journals (17) whose journal axes "B" are situated in one plane and intersect at a joint axis "A", each journal (17) being guided in the running surfaces (16) of the housing (13) while being associated to a rolling bearing (1) comprising an inner ring (3), an outer ring (2) and cylindrical rolling elements (4), and retainer rings (8a, 8b) for the mutual axial securing of all the components of the rolling bearing (1) with respect to the journal axis "B" of the rolling bearing (1), **characterised in that** the outer ring (2) comprises inner collars (5a, 5b) which are arranged as mirror images of each other and are configured with two radial steps, the rolling elements (4) being guided on an axially inner collar section (6a, 6b) and the retainer rings (8a, 8b) being guided on the axially outer collar section (7a, 7b).

2. Universal joint according to Claim 1, **characterised in that** the first collar section (6a, 6b) extends radially to near an axis of symmetry of the rolling elements (4).

3. Universal joint according to Claim 1, **characterised by** an axial spacing of the second collar section (7a, 7b) to the first collar section (6a, 6b), which spacing has a dimension "a" that is larger than a wall thickness "b" of the retainer ring (8a, 8b).

4. Universal joint according to Claim 1, **characterised in that** a length dimension of the inner ring (3) is larger than a length dimension of the rolling elements (4).

5. Universal joint according to Claim 1, **characterised in that** the retainer rings (8a, 8b) comprise a parting gap whose width "S" is equal to or smaller than the diameter of the rolling elements (4).

6. Universal joint according to Claim 5, **characterised in that** the parting gap "S" of the retainer ring (8a, 8b) is oriented radially with respect to the journal axis "B".

7. Universal joint according to Claim 1, **characterised in that**, directly inwards of the collar sections (6a, 6b), an undercut (11a, 11b) is made in the outer ring (2) in correspondence to each end face of the rolling elements (4).

8. Universal joint according to Claim 1, **characterised by** a distance "x" between the retainer rings (8a, 8b) and the end faces of the inner ring (3) in an installed position.

9. Universal joint according to Claim 1, **characterised by** a radial overlap "e" between the retainer ring (8a, 8b) and the outer diameter of the inner ring (3), which overlap has a dimension that is equal to or larger than the wall thickness of the retainer ring (8a, 8b).

10. Universal joint according to Claim 1, **characterised by** a width "f" of the collar section (7a, 7b), which width is equal to or larger than half the wall thickness of the retainer ring (8a, 8b).

11. Universal joint according to Claim 1, **characterised by** a rounded outer profile (18) of the ring (2).

12. Universal joint according to Claim 1, **characterised in that** the outer ring (2) has a radially stepped, cylindrical outer profile (18d).

13. Universal joint according to Claim 1, **characterised by** a peripherally continuous, substantially pointed roof-like outer profile (18a).

## Revendications

1. Joint homocinétique tripode (12) comprenant :
- une première partie tournante, à savoir un boîtier (13) qui présente trois dispositifs à piste de circulation (15) composés chacun de deux portées de circulation (16) planes et parallèles,
- une seconde partie tournante sous forme d'étoile de tripode (14) comportant trois pivots (17) dont les axes « B » sont disposés dans un même plan et se coupent sur l'axe « A » du joint articulé, les pivots (17) étant guidés par les portées de circulation (16) du boîtier (13),
- associé à chaque pivot (17) un roulement à rouleaux (1) composé d'une bague interne (3), d'une bague externe (2) et de corps roulants (4) cylindriques,
- des bagues de maintien (8a, 8b) pour sécuriser réciproquement tous les composants de chaque roulement à rouleau (1) dans leur position par rapport à l'axe « B » du pivot associé au roulement (1),
**caractérisé en ce que**
la bague externe (2) a ses bords intérieurs, symétriques, qui présentent, radialement deux gradins créant une première partie marginale (6a, 6b) axialement interne qui guide les corps roulants (4) et une seconde partie marginale (7a, 7b) axialement externe qui guide les bagues de maintien (8a, 8b) disposées symétriquement.

2. Joint homocinétique selon la revendication 1,
**caractérisé en ce que**
la première partie marginale (6a, 6b) s'étend radialement jusqu'à proximité de l'axe de symétrie des corps roulants (4).

3. Joint homocinétique selon la revendication 1,
**caractérisé par**
un espacement axial séparant la seconde partie marginale (7a, 7b) de la première (6a, 6b) dont la dimension « a » dépasse l'épaisseur « b » de la paroi de la bague de maintien (8a, 8b).

4. Joint homocinétique selon la revendication 1,
**caractérisé en ce que**
la longueur de la bague interne (3) dépasse la longueur des corps roulants (4).

5. Joint homocinétique selon la revendication 1,
**caractérisé en ce que**
les bagues de maintien (8a, 8b) présentent une fente de séparation dont la largeur « S » est égale ou inférieure au diamètre des corps roulants (4).

6. Joint homocinétique selon la revendication 5,
**caractérisé en ce que**
la fente de séparation « S » de la bague de maintien (8a, 8b) est dirigée radialement par rapport à l'axe de pivot « B ».

7. Joint homocinétique selon la revendication 1,
**caractérisé en ce que**
une rainure de dégagement (11a, 11b) est pratiquée dans la bague externe (2), directement devant la partie marginale (6a, 6b), en correspondance avec chaque face frontale des corps roulants (4).

8. Joint homocinétique selon la revendication 1,
**caractérisé en ce que**
chaque bague de maintien (8a, 8b) est en position montée, espacée de la face frontale de la bague interne (3) correspondante, d'une distance « x ».

9. Joint homocinétique selon la revendication 1,
**caractérisé en ce que**
la dimension « e » de la couverture de la bague interne par la bague de maintien (8a, 8b), mesurée diamétralement, est égale ou supérieure à l'épaisseur de la paroi de la bague de maintien (8a, 8b).

10. Joint homocinétique selon la revendication 1,
**caractérisé en ce que**
la partie marginale (7a, 7b) présente une largeur « f » qui est égale ou supérieure à la moitié de l'épaisseur de la paroi de la bague de maintien (8a, 8b).

11. Joint homocinétique selon la revendication 1,
**caractérisé en ce que**
le profil extérieur (18) de la bague externe (2) est arrondi.

12. Joint homocinétique selon la revendication 1,
**caractérisé en ce que**
la bague externe (2) présente un profil extérieur (18d) cylindrique, étagé radialement.

13. Joint homocinétique selon la revendication 1,
**caractérisé en ce que**
la bague externe (2) présente un profil extérieur (18a) en forme de toit en pointe.
